# EUROPEAN PATENT APPLICATION

(11) **EP 2 918 869 A2**
(43) Date of publication of application: **16.09.2015**
(21) Application number: 15154973.0
(22) Date of filing: 13.02.2015
(51) Int. Cl.: F16H 1/14, A01D 69/00

(54) **Agricultural harvester with bevel gear drive**

(30) Priority: 14.03.2014 US 201414212459
(71) Applicant: Deere & Company, Moline, IL 61265 (US)
(72) Inventor: Mackin, Ryan P, Milan, IL, IL Illinois 61264 (US); Roe, Dennis M, Coal Valley, IL Illinois 61240 (US)
(74) Representative: Holst, Sönke

(57) **Abstract**

A bevel gear drive arrangement for a grain conveyor of an agricultural harvester (100), wherein the agricultural harvester (100) comprises a chassis (102), wheels (104), a grain tank (118), and a grain elevator (114, 116), the bevel gear drive arrangement comprising a frame (408); a first shaft (406) supported on a first bearing (532); a first bevel gear (404) fixed to the first shaft (406); a second shaft (400); a second bevel gear (402) fixed to the second shaft (400), wherein the second shaft (400) is translatable along its axis (510) to a plurality of operating positions with respect to the frame (408).

## Description

The invention relates to agricultural harvesters with bevel drive gear arrangements.

### Technological Background

Agricultural vehicles such as agricultural harvesters convey crop material (grain or MOG) from subsystem to subsystem. The conveyors that move crop material are driven by variety of means. Various drive arrangements are provided to connect the internal combustion engine (typically the source of power in most agricultural vehicles) to these conveyors. Hydraulic means, mechanical means, and electrical means may be used. One element used, particularly with conveyors that elevate grain (i.e. elevators) such as auger conveyors, are bevel gear drives. One problem with bevel gear drives used in agricultural environments is the problem of fouling or jamming the bevel gear sets. Another problem is that of quickly and easily replacing broken components.

What is needed, therefore, is a bevel gear drive that is less subject to jamming and permits for the easier replacement of bevel gear drive elements.

### Invention

The present invention is defined by the claims.

A bevel gear drive arrangement for a grain conveyor of an agricultural harvester is provided, wherein the bevel gear drive arrangement comprises a frame; a first shaft supported on a first bearing in the frame for rotation with respect to the frame about a first axis; a first bevel gear fixed to the first shaft; a second shaft supported on a second bearing in the frame for rotation with respect to the frame about a second axis; a second bevel gear fixed to the second shaft that engages with the first bevel gear to form a bevel gear set, wherein the second shaft is translatable along the second axis to a plurality of operating positions with respect to the frame.

The agricultural harvester is preferably configured to thresh, separate, and clean grain, wherein the agricultural harvester comprises a chassis, wheels supporting the chassis for movement over the ground, a grain tank supported on the chassis, and a grain elevator to convey the grain to the grain tank, wherein the grain elevator comprises an auger conveyor that further comprises an auger disposed inside a tube, the auger having a central shaft.

The bevel gear arrangement may further comprise a locking means to fix the second shaft at the plurality of operating positions.

The locking means may comprise at least one nut.

The at least one nut may be threadedly engaged with the second shaft to rotate with respect to the second shaft about the second axis.

The locking means may comprise at least another nut.

The locking means may comprise a first element that is configured to be fixed to the second shaft in a plurality of positions relative to the second shaft, and is configured to abut a first side of the second bearing.

The locking means may comprise a second element that is configured to be fixed to the second shaft in a plurality of positions relative to the second shaft, and is configured to abut a second side of the second bearing.

The first side of the second bearing may be a first side of an inner race of the second bearing, and the second side of the second bearing may be a second side of the inner race of the second bearing.

The first side of the inner race and the second side of the inner race may be perpendicular to a longitudinal axis of the first shaft.

An agricultural harvester comprises a chassis; wheels supporting the chassis for movement over the ground; a grain tank supported on the chassis; and a grain elevator to convey grain to the grain tank; wherein the grain elevator comprises an auger conveyor that further comprises an auger disposed inside a tube, the auger having a central shaft with a lower end coupled to a bevel gear arrangement in accordance with the mentioned invention.

### Embodiment

An embodiment of the invention is shown in the drawings, in which:
Figure 1 is a left side view of an agricultural harvester in accordance with the present invention.
Figure 2 is a right side view of the grain elevator of Figure 1.
Figure 3 is a partial cutaway front perspective view of the grain elevator of Figures 1-2.
Figure 4 is a perspective view of a bevel gear drive of the grain elevator of Figures 1-3.
Figure 5 is a cross-sectional view of the bevel gear drive of Figures 2-4.

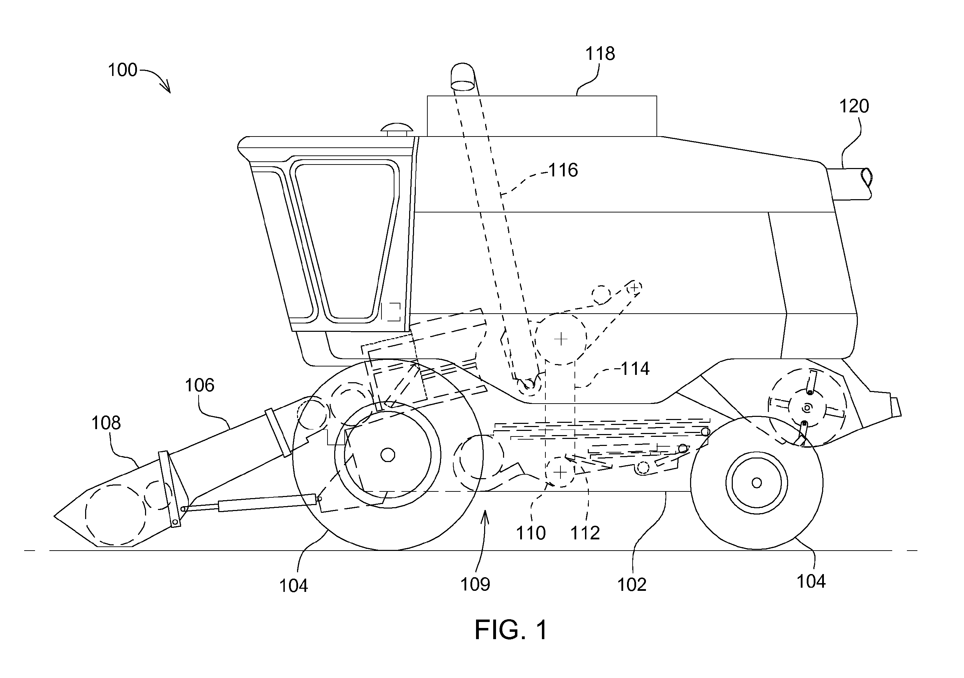

Referring to Figure 1, an agricultural harvester 100, here shown as a combine, comprises a chassis 102 that is supported on wheels 104 to be driven over the ground and harvest crops. A feederhouse 106 extends from the front of the agricultural harvester 100. An agricultural harvesting head 108 is supported on the front of the feederhouse 106. When the agricultural harvester 100 operates, it carries the feederhouse 106 through the field harvesting crops. The feederhouse 106 conveys crop gathered by the agricultural harvesting head 108 rearward and into the body of the agricultural harvester 100. Inside the agricultural harvester 100, the crop is threshed, separated, and cleaned by mechanisms 109. The now-clean grain falls downward into an auger trough 110. An auger 112 disposed in the auger trough 110 carries the material to the right side of the agricultural harvester 100 and deposits the grain in the lower end of a vertical grain elevator 114. The grain lifted by the vertical grain elevator 114 reaches the top of the vertical grain elevator 114 and is deposited in an auger conveyor 116. The auger conveyor 116 carries the crop upward until it reaches the upper exit of the auger conveyor 116. The grain is then released from the auger conveyor 116 and falls into a grain tank 118. The agricultural harvester 100 is periodically unloaded by pivoting an unloading auger 120 away from the side of the agricultural harvester 100, engaging the unloading longer 120, and carrying grain from the grain tank 118 away from the agricultural harvester 100 and into a grain cart or grain wagon (not shown) traveling alongside the agricultural harvester 100.

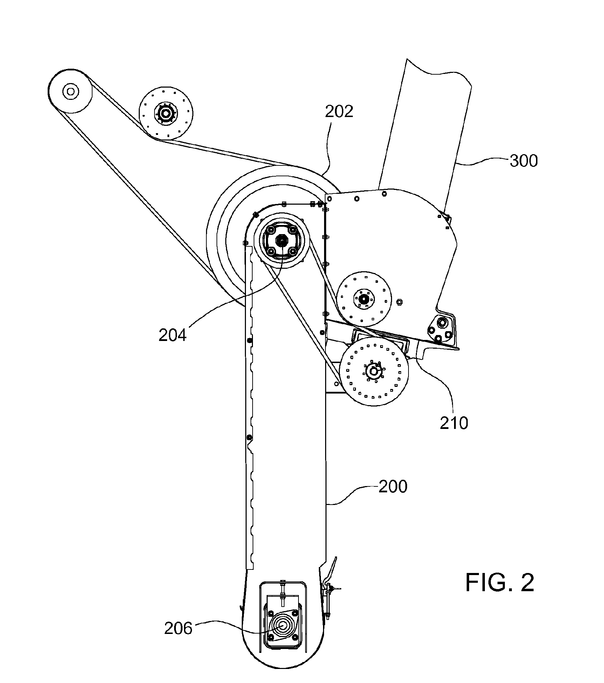

Referring to Figure 2, the vertical grain elevator 114 comprises a generally rectangular and vertical housing 200 that contains within it a chain belt upon which several paddles (not shown) are mounted. The vertical grain elevator 114 is driven by a pulley 202 that connects to a shaft 204. The shaft supports a sprocket (not shown) about which the chain belt and paddles are driven. The lower end of the chain belt and paddles wrap around a similar sprocket (not shown) supported on a shaft 206.

The paddles in the vertical grain elevator 114 lift the crop upward and deposit it in a housing 208. Crop falling on the floor 210 of the housing 208 is received in the open bottom of the auger conveyor 116 and is conveyed upward therefrom.

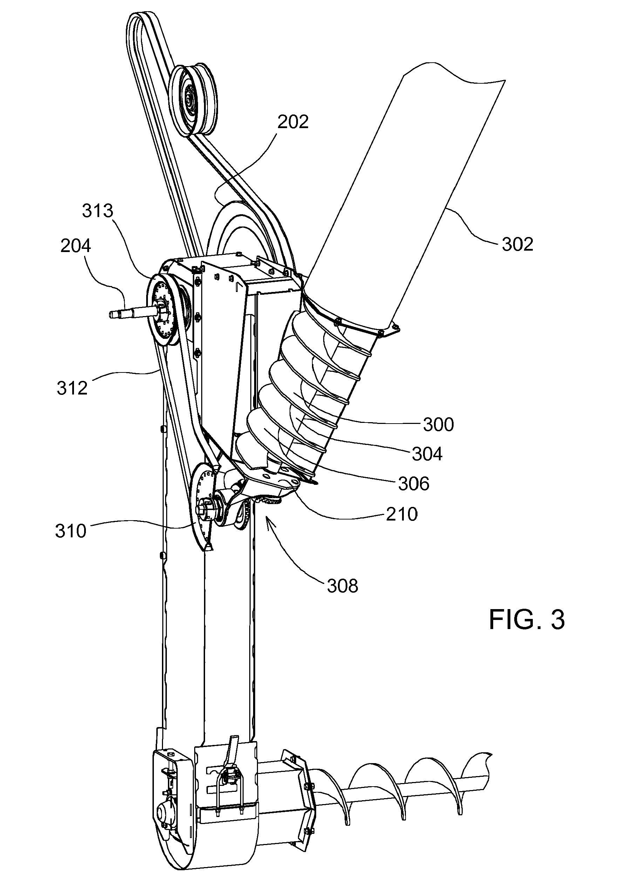

Referring to Figure 3, the auger conveyor 116 includes an auger 300 disposed inside a tube 302. The auger 300 comprises a central shaft 304 to which is fixed a spiral coil 306. The central shaft 304 extends to a hole in the floor 210 of the housing 208. The central shaft 304 is coupled to a bevel gear drive 308. The bevel gear drive 308 drives the auger 300 in rotation, rotating the auger and conveying crop upward.

The bevel gear drive 308 is driven by a pulley 310 (shown in partial cutaway in Figure 3). The pulley 310 is driven by an endless belt 312, which is in turn is driven by a pulley 313 mounted on shaft 204.

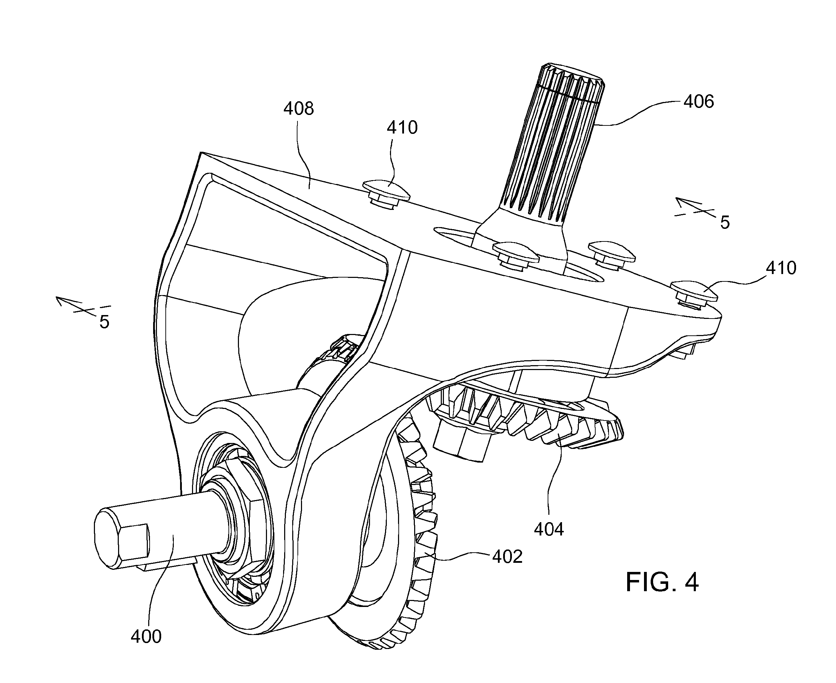

Referring to Figure 4, the bevel gear drive 308 has an input shaft 400 that is coupled to and drives a first bevel gear 402. The first bevel gear 402 is engaged to and drives a second bevel gear 404. The second bevel gear 404 is fixed to an output shaft 406 and drives the output shaft 406 in rotation.

The input shaft 400 is fixed to the pulley 310 and is driven thereby. The output shaft 406 is fixed to the central shaft 304 and drives the central shaft in rotation.

The input shaft 400 and the output shaft 406 are supported for rotation by a frame 408. Frame 408 holds the input shaft 400 and the output shaft 406 in fixed relative positions, thereby maintaining the proper engagement of the teeth on the first bevel gear 402 and the second bevel gear 404. The frame 408 is configured to receive removable fasteners 410. The removable fasteners 410 extend through the floor 210 of the housing 208 and fix the frame 408 to the underside of the floor 210. The output shaft 406 extends through a hole in the bottom of the floor 210 and drivingly engages the lower end of the central shaft 304.

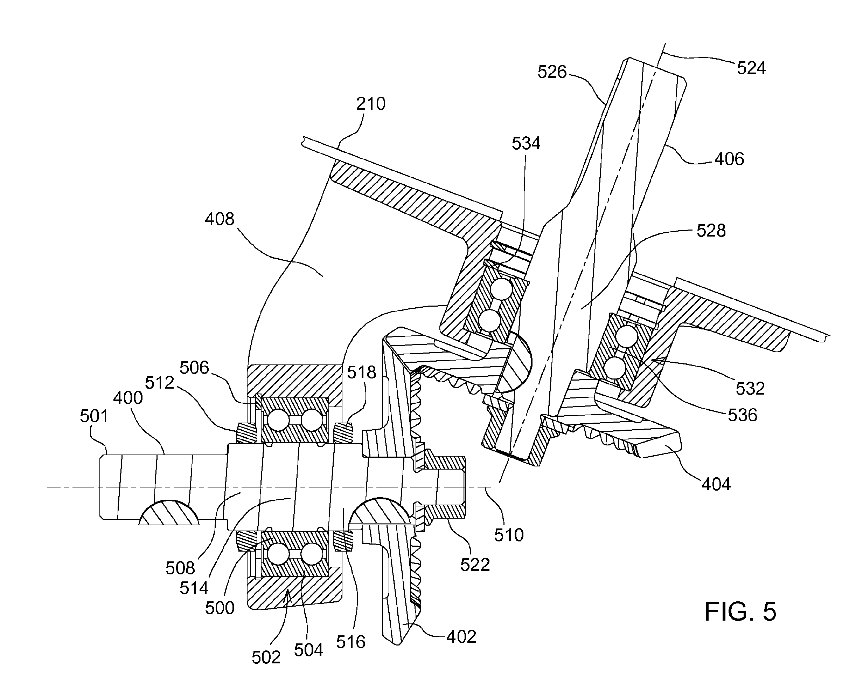

Referring to Figure 5, the input shaft 400 is supported for rotation on an inner race 500 of a bearing 502. The outer race 504 of the bearing 502 is fixed in an aperture in the frame 408 and held in place by a snap ring 506. The bearing 502 is a dual race ball bearing.

Input shaft 400 comprises a keyed shaft portion 501, a first threaded shaft portion 508, a central shaft portion 514, a second threaded shaft portion 516, and a gear support portion 520.

The keyed shaft portion 501 is at an outer end of the input shaft 400 and is configured to be coupled to the pulley 310 and to be driven thereby.

The first threaded shaft portion 508 is fixed to the end of the keyed shaft portion 501. The first threaded shaft portion 508 has a threaded outer surface that is concentric with a longitudinal axis 510 of the input shaft 400. The first threaded shaft portion 508 is threadedly engaged with a first nut 512. The first nut 512 can be translated along first threaded shaft portion 508 in a direction parallel to the longitudinal axis 510 by rotating the first nut 512 with respect to the first threaded shaft portion 508. The first nut 512 abuts a first side of the inner race 500.

The central shaft portion 514 is fixed to the first threaded shaft portion 508. The central shaft portion 514 has an outer surface that is configured to be received and supported on the inner surface of the inner race 500. The outer surface of the central shaft portion 514 is concentric with the longitudinal axis 510. The fit between the two is preferably a friction fit or a light interference fit.

The second threaded shaft portion 516 is fixed to the central shaft portion 514. It has a threaded outer surface that is concentric with the longitudinal axis 510. The second threaded shaft portion 516 is threadedly engaged with a second nut 518. The second nut 518 can be translated along the second threaded shaft portion 516 by rotating the second nut 518 with respect to the second threaded shaft portion 516. The second nut 518 abuts a second side of the inner race 500 that is opposite to the first side of the inner race 500.

The gear support portion 520 has an outer surface that is concentric with the longitudinal axis 510. The outer surface is configured to support the first bevel gear 402. A third nut 522 is fixed to an inner end of the input shaft 400 to secure the first bevel gear 402 to the input shaft 400.

A bearing 532 is received in frame 408. It is held in place in the frame 408 by a snap ring 534. The output shaft 406 is supported for rotation on the inner race 536 of the bearing 532. The outer race of the bearing 532 is supported in an aperture in the frame 408. The bearing 532 is a double race ball bearing.

Output shaft 406 has a central longitudinal axis 524 about which it rotates with respect to frame 408. Output shaft 406 comprises an end portion 526, a central shaft portion 528 fixed to the end portion 526, and a gear support portion 530. All of these portions are concentric with respect to the central longitudinal axis 524.

The end portion 526 has a splined outer surface that extends through the floor 210 and is configured to engage and drive the central shaft 304.

The central shaft portion 528 has an outer surface that is configured to be received and supported on the inner surface of the inner race 536. The fit between the outer surface of the central shaft portion 528 and the inner surface of the inner race 536 is preferably an interference fit or a force fit.

The gear support portion 530 has an outer surface that is configured to support the second bevel gear 404. A fourth nut 538 is fixed to an inner end of the output shaft 406 to secure the second bevel gear 404 to the output shaft 406.

The gear lash between the first bevel gear 402 and the second bevel gear 404 can be adjusted by translating the input shaft 400 with respect to the frame 408 and the bearing 502. In normal operation, both the first nut 512 and the second nut 518 are adjusted to simultaneously abut (e.g. press against) the opposing sides of the inner race 500 of the bearing 502. This fixes the longitudinal position of the input shaft 400 with respect to the bearing 502, which in turn is fixed in position with respect to the frame 408. In this manner, the gear lash of the bevel gearing does not change.

To increase the gear lash, the second nut 518 is loosened, and the first nut 512 is tightened against the inner race 500. As the first nut 512 is tightened, it pulls the central shaft portion 514 outward away from the second bevel gear 404, thereby increasing the gear lash. Once the appropriate gear lash has been achieved, the second nut 518 is tightened against the inner race 500 and the input shaft 400 is thereby fixed in a new position with respect to the bearing 502.

To decrease the gear lash, the first nut 512 is loosened, and the second nut 518 is tightened against the inner race 500. As the second nut 518 is tightened, it pulls the central shaft portion 514 inward toward the second bevel gear 404, thereby reducing the gear lash. Once the appropriate gear lash has been achieved, the first nut 512 is tightened against the inner race 500 in the input shaft is thereby fixed in a new position with respect to the bearing 502.

The bevel gear arrangement can be operated in any of these positions. In this manner, a greater (or lesser) operating clearance can be provided between the two bevel gears, and thus the bevel gear arrangement can accommodate crop matter that becomes trapped between the two bevel gears.

The input shaft 400 faces the operator (see Figure 3) and can be accessed easily, typically by inserting a wrench into the space between the pulley 310 and the frame 408. Depending upon the clearance, it may be necessary to remove the belt 312 and the pulley 310 to expose the free end of the input shaft 400 (as best shown in Figure 5). This adjustment can be done quickly and easily in the field with common hand tools available to the operator of the agricultural harvester 100.

The figures and explanations herein illustrate an embodiment of the invention. The invention is not limited to the illustrated embodiment, however. To one skilled in the art of corn head design and operation, other embodiments of the invention are also possible.

## Claims

1. A bevel gear drive arrangement for an agricultural harvester (100), the drive arrangement comprising:
a frame (408);
a first shaft (406) supported on a first bearing (532) in the frame (408) for rotation with respect to the frame (408) about a first axis (524);
a first bevel gear (404) fixed to the first shaft (406);
a second shaft (400) supported on a second bearing (502) in the frame (408) for rotation with respect to the frame (408) about a second axis (510);
and a second bevel gear (402) fixed to the second shaft (400) that engages with the first bevel gear (404) to form a bevel gear set;
wherein the second shaft (400) is translatable along the second axis (510) to a plurality of operating positions with respect to the frame (408).

2. The bevel gear drive arrangement according to Claim 1, wherein the agricultural harvester (100) is configured to thresh, separate, and clean grain, and further wherein the agricultural harvester (100) comprises a chassis (102), wheels (104) supporting the chassis (102) for movement over the ground, a grain tank (118) supported on the chassis (102), a grain elevator (114, 116), to convey the grain to the grain tank (118), wherein the grain elevator (114, 116) comprises an auger conveyor (116) that further comprises an auger (300) disposed inside a tube (302), the auger (300) having a central shaft (304) with a lower end, and the bevel gear drive arrangement is arranged to drive the auger conveyor (116).

3. The bevel gear drive arrangement for a grain elevator of an agricultural harvester (100) of Claim 2, further comprising locking means (512, 518) to fix the second shaft (400) at the plurality of operating positions.

4. The bevel gear drive arrangement for a grain conveyor of an agricultural harvester (100) of Claim 3, wherein the locking means (512, 518) comprises at least one nut (512, 518).

5. The bevel gear drive arrangement for a grain conveyor of an agricultural harvester (100) of Claim 4, wherein the at least one nut (512, 518) is threadedly engaged with the second shaft (400) to rotate with respect to the second shaft about the second axis (510).

6. The bevel gear drive arrangement for a grain conveyor of an agricultural harvester (100) of Claim 4, wherein the locking means (512, 518) comprises at least another nut (512, 518).

7. The bevel gear drive arrangement for a grain conveyor of an agricultural harvester (100) of Claim 3, wherein the locking means (512, 518) comprises a first element (512, 518) that is configured to be fixed to the second shaft (400) in a plurality of positions relative to the second shaft (400), and is configured to abut a first side of the second bearing (502).

8. The bevel gear drive arrangement for a grain conveyor of an agricultural harvester (100) of Claim 7, wherein the locking means (512, 518) comprises a second element (512, 518) that is configured to be fixed to the second shaft (400) in a plurality of positions relative to the second shaft (400), and is configured to abut a second side of the second bearing (502).

9. The bevel gear drive arrangement for a grain conveyor of an agricultural harvester (100) of Claim 8, wherein the first side of the second bearing (502) is a first side of an inner race (500) of the second bearing (502), and wherein the second side of the second bearing (502) is a second side of the inner race (500) of the second bearing (502).

10. The bevel gear drive arrangement for a grain conveyor of an agricultural harvester (100) of Claim 9, wherein the first side of the inner race (500) and the second side of the inner race (500) are perpendicular to a longitudinal axis (510) of the first shaft (400).

11. An agricultural harvester (100) comprising a chassis (102); wheels (104) supporting the chassis (102) for movement over the ground; a grain tank (118) supported on the chassis (102); and a grain elevator (114, 116) to convey grain to the grain tank (118); wherein the grain elevator (114, 116) comprises an auger conveyor (116) that further comprises an auger (300) disposed inside a tube (302), the auger (300) having a central shaft (304) with a lower end coupled to a bevel gear arrangement in accordance with Claim 2.
